# EUROPEAN PATENT APPLICATION

(11) **EP 4 561 081 A1**
(43) Date of publication of application: **28.05.2025**
(21) Application number: 23841968.3
(22) Date of filing: 13.06.2023
(51) Int. Cl.: H04N 21/466, H04N 21/482

(54) **MULTIMEDIA PLAYING METHOD AND DEVICE, STORAGE MEDIUM, AND PROGRAM PRODUCT**

(30) Priority: 22.07.2022 CN 202210869290
(71) Applicant: Beijing Zitiao Network Technology Co., Ltd., Beijing 100190 (CN)
(72) Inventor: LU, Xiao, Beijing 100028 (CN); YANG, Bowen, Beijing 100028 (CN); XIE, Zhiyang, Beijing 100028 (CN); XUE, Fanyong, Beijing 100028 (CN)
(74) Representative: Dentons UK and Middle East LLP
(86) International application number: PCT/CN2023/100011
(87) International publication number: WO 2024/016902

(57) **Abstract**

Embodiments of the present disclosure provide a multimedia playing method and device, a storage medium, a program product, and a program. The method comprises: in response to a target playing mode triggering instruction of a user in a player, performing, for the user, sequence adjustment on a playing queue of a multimedia content collection; obtaining recommended multimedia content, adding the recommended multimedia content into the playing queue of the multimedia content collection, and identifying the recommended multimedia content in the playing queue; and playing multimedia content in the playing queue.

## Description

### CROSS-REFERENCE TO RELATED APPLICATIONS

The present disclosure claims priority to Chinese Patent Application No. 202210869290.8, filed with the China National Intellectual Property Administration on July 22, 2022, and entitled "MULTIMEDIA PLAYING METHOD AND DEVICE, STORAGE MEDIUM, AND PROGRAM PRODUCT", which is incorporated herein by reference in its entirety.

### TECHNICAL FIELD

Embodiments of the present disclosure relate to the field of computer and network communication technologies, and in particular, to a method and apparatus for multimedia playback, a storage medium, a program product and a program.

### BACKGROUND

With the development of Internet technologies, various players come into being. A user can use a player to play a multimedia content, for example, listen to a song, etc., which achieves the purposes of relaxation, sentiment cultivation, etc.

A multimedia content collection may usually be played in different playing modes, for example, play in a sequence order of a playlist or shuffle play. However, the play in a sequence order of a playlist or the shuffle play alone cannot satisfy a personalized requirement of the user.

### SUMMARY

Embodiments of the present disclosure provide a method and apparatus for multimedia playback, a storage medium, a program product and a program, so as to satisfy a personalized requirement of a user when playing a multimedia content collection.

In the first aspect, an embodiment of the present disclosure provides a method for multimedia playback, which includes:
in response to a target playing mode triggering instruction of a user in a player, performing a sequence adjustment for the user on a play queue of a multimedia content collection;
acquiring a recommended multimedia content, adding the recommended multimedia content into the play queue of the multimedia content collection, and identifying the recommended multimedia content in the play queue; and
playing a multimedia content in the play queue.

In the second aspect, an embodiment of the present disclosure provides an apparatus for multimedia playback, includes a sorting unit, a recommendation unit and a playback unit.

The sorting unit is configured to perform a sequence adjustment for a user on a play queue of a multimedia content collection, in response to a target playing mode triggering instruction of the user in a player.

The recommendation unit is configured to acquire a recommended multimedia content, add the recommended multimedia content into the play queue of the multimedia content collection, and identify the recommended multimedia content in the play queue.

The playback unit is configured to play a multimedia content in the play queue.

In the third aspect, an embodiment of the present disclosure provides an electronic device. The electronic device includes at least one processor and a memory. The memory stores computer-executable instructions; and the at least one processor executes the computer-executable instructions stored in the memory, which causes the at least one processor to execute the method for multimedia playback as described in the first aspect and various possible designs of the first aspect.

In the fourth aspect, an embodiment of the present disclosure provides a computer-readable storage medium. The computer-readable storage medium stores computer-executable instructions, when the computer-executable instructions are executed by a processor, the processor implements the method for multimedia playback as described in the first aspect and various possible designs of the first aspect.

In the fifth aspect, an embodiment of the present disclosure provides a computer program product, which includes computer-executable instructions. When the computer-executable instructions are executed by a processor, the processor implements the method for multimedia playback as described in the first aspect and various possible designs of the first aspect.

In the sixth aspect, an embodiment of the present disclosure provides a computer program. The computer program causes a computer to execute the method for multimedia playback as described in the first aspect and various possible designs of the first aspect.

According to the method and apparatus for multimedia playback, storage medium, program product and program provided in the embodiments of the present disclosure, in response to the target playing mode triggering instruction of the user in the player, a sequence adjustment is performed for the user on the play queue of the multimedia content collection; the recommended multimedia content is acquired, the recommended multimedia content is added into the play queue of the multimedia content collection, and the recommended multimedia content is identified in the play queue; and the multimedia content in the play queue is played.

### BRIEF DESCRIPTION OF DRAWINGS

In order to more clearly describe the technical solutions in the embodiments of the present disclosure or in the prior art, the accompanying drawings for describing the embodiments or the prior art will be briefly described below. Apparently, the accompanying drawings in the description below show some embodiments of the present disclosure, and persons of ordinary skill in the art may still derive other accompanying drawings from these accompanying drawings without creative efforts.
Fig. 1 is a schematic diagram of an interface variation of a method for multimedia playback provided in an embodiment of the present disclosure;
Fig. 2 is a schematic flowchart of a method for multimedia playback provided in an embodiment of the present disclosure;
Fig. 3 is a schematic flowchart of a method for multimedia playback provided in another embodiment of the present disclosure;
Fig. 4 is a structural block diagram of an apparatus for multimedia playback provided in an embodiment of the present disclosure; and
Fig. 5 is a structural schematic diagram of a hardware structure of an electronic device provided in an embodiment of the present disclosure.

### DETAILED DESCRIPTION

In order to make the objects, technical solutions and advantages of embodiments of the present disclosure clearer, the technical solutions in the embodiments of the present disclosure will be described clearly and completely below with reference to the accompanying drawings in the embodiments of the present disclosure. Obviously, the embodiments described are some of, rather than all of, the embodiments of the present disclosure. All the other embodiments obtained by those of ordinary skill in the art based on the embodiments of the present disclosure without any creative effort shall fall within the scope of protection of the present disclosure.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from a user, prompt information is sent to the user to clearly inform the user that a requested operation will require access to and use of personal information of the user. As such, the user can independently choose, based on the prompt information, whether to provide the personal information to software or hardware, such as an electronic device, an application, a server, or a storage medium, that performs the operations of the technical solutions of the present disclosure.

As an optional but non-limiting implementation, in response to the reception of the active request from the user, the prompt information may be sent to the user in the form of, for example, a pop-up window, in which the prompt information may be presented in text. Furthermore, the pop-up window may also include a selection control for the user to choose whether to "agree" or "disagree" to provide the personal information to the electronic device.

It can be understood that the above process of notifying and obtaining user authorization is only illustrative and does not constitute a limitation on the implementations of the present disclosure, and other manners that satisfy the relevant laws and regulations may also be applied in the implementations of the present disclosure.

In the prior art, a multimedia content collection may usually be played in different playing modes, for example, play in a sequence order of a playlist or shuffle play. However, the play in a sequence order of a playlist or the shuffle play alone cannot satisfy a personalized requirement of the user, particularly the requirement for play in an order preferred by the user. Moreover, the play is limited to the multimedia content collection, and the content lacks diversity, which is not conducive to the user to discover more interesting multimedia contents.

In order to solve the problems mentioned above, an embodiment of the present disclosure provides a method for multimedia playback that provides a new playing mode. In the target playing mode, a playback order of a multimedia content collection is adjusted for a user (adjusted according to attribute information of a user group to which the user belongs), and the recommended multimedia content is further added. Specifically, in response to a target playing mode triggering instruction of the user in a player, a sequence adjustment is performed for the user on a play queue of the multimedia content collection; a recommended multimedia content is acquired, the recommended multimedia content is added into the play queue of the multimedia content collection, and the recommended multimedia content is identified in the play queue; and a multimedia content in the play queue is played. In the target playing mode, the sequence adjustment is performed for the user on the play queue of the multimedia content collection, so that the playback order can be more in line with the user's preference. In addition, the recommended multimedia content is added into the play queue, which makes the user discover more interesting multimedia contents based on the existing multimedia content collection, and makes the multimedia content collection richer, thereby improving the user experience in the player.

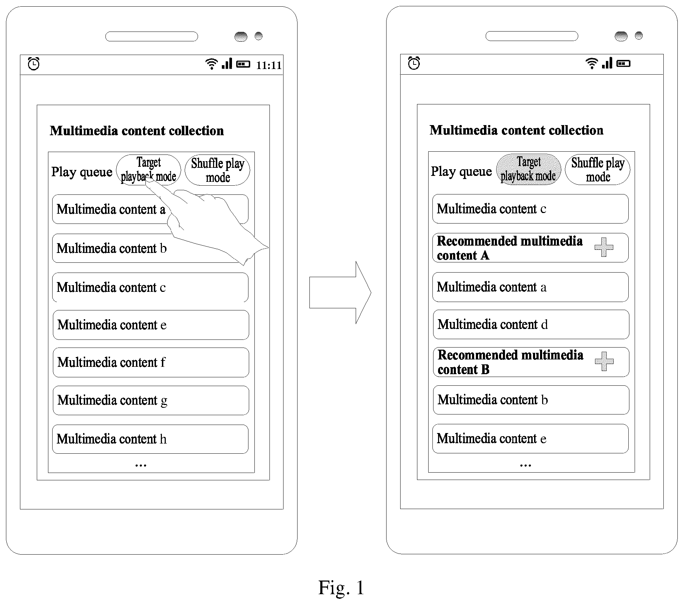

An application scenario of the method for multimedia playback provided in the embodiment of the present disclosure is shown in Fig. 1. The user triggers the target playing mode of a player on a terminal, and the player of the terminal performs a sequence adjustment for the user on the play queue of the multimedia content collection. For example, an order of the original multimedia contents in the play queue is shown in an interface on the left of Fig. 1: the multimedia content a, the multimedia content b, the multimedia content c, the multimedia content d, the multimedia content e, etc. After the sequence adjustment, the order of the original multimedia content changes into an order shown in an interface on the right of Fig. 1: the multimedia content c, the multimedia content a, the multimedia content d, the multimedia content b, the multimedia content e, etc. The recommended multimedia content is acquired, the recommended multimedia content (such as the recommended multimedia content A and the recommended multimedia content B) is added into the play queue of the multimedia content collection, and the recommended multimedia content is identified in the play queue (for example, a specific color or a specific icon is added).

The method for multimedia playback of the present disclosure is described in detail below with reference to specific embodiments.

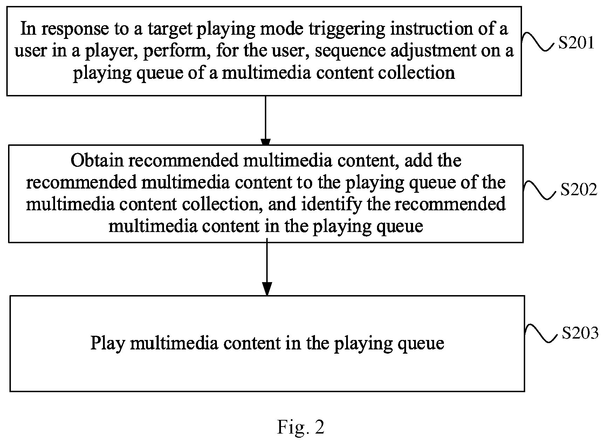

Fig. 2 is a schematic flowchart of a method for multimedia playback provided in an embodiment of the present disclosure. The method of the embodiment is applicable to a terminal device or a server. The method for multimedia playback includes the following steps.

S201: in response to a target playing mode triggering instruction of a user in a player, performing a sequence adjustment for the user on a play queue of a multimedia content collection.

In this embodiment, the user is a user who is currently using the player. When the user needs to initiate the target playing mode, the user may trigger to initiate the target playing mode in an interaction interface of the player, where the target playing mode is a new playing mode other than conventional shuffle play, playlist play, or repeat play. In the target playing mode, the playback order of the multimedia content collection is adjusted for the user (adjusted based on the user's preference), and the recommended multimedia content is further added. The multimedia content may be audio, video, etc. taking the audio as an example, the multimedia content may be a song, and the multimedia content collection may be a list of songs.

Optionally, a trigger button of the target playing mode may be set on a detail page of the multimedia content collection of the player. In response to a triggering instruction of the user for the target playing mode on a detail page of a song collection, the target playing mode is initiated, and a jump may be made to a page of the play queue of the multimedia content collection. Optionally, upon triggering the trigger button of the target playing mode on the detail page of the multimedia content collection for the first time, a half-screen floating layer may be displayed on the detail page of the multimedia content collection, and target playing mode introduction information and a target playing mode selection button are displayed in the half-screen floating layer. Upon triggering the trigger button of the target playing mode on the detail page of the multimedia content collection for the second time or later, the target playing mode may be initiated directly.

Optionally, the trigger button of the target playing mode may alternatively be set on a page of the play queue of the multimedia content collection. The target playing mode is initiated in response to the triggering instruction of the user for the target playing mode on the page of the play queue. Optionally, upon triggering the trigger button of the target playing mode on the page of the play queue of the multimedia content collection for the first time, a function introduction to the target playing mode may be displayed, for example, the function introduction may be displayed in the form of a bubble; and upon triggering the trigger button of the target playing mode for the second time or later, the target playing mode may be initiated directly.

After triggering the target playing mode, a sequence adjustment may be performed for the user on the play queue of the multimedia content collection, so that the multimedia content in the multimedia content collection can be played for the user in a specific order, so as to satisfy the user's preference, instead of being played in a random order or in a sequence order of a playlist.

Optionally, the performing a sequence adjustment for the user on a play queue of a multimedia content collection may include: performing the sequence adjustment on the play queue of the multimedia content collection according to attribute information of a user group to which the user belongs.

In this embodiment, under the premise of obtaining user authorization, or under the premise of disclosing the attribute information by the user, the attribute information of the user group to which the user belongs can be acquired. The attribute information may include a historical playback behavior of the user group (including, but not limited to, a full content playback behavior, a skip behavior, a favorite and like behavior, etc.), preference information of the user group, etc., or the preference information of the user group may also be predicted according to the historical playback behavior of the user group. Further, an association degree parameter between the user group and each multimedia content in the play queue of the multimedia content collection may be determined according to the attribute information of the user group to which the user belongs. The association degree parameter is used to represent a degree to which the user group is interested in or likes the multimedia content, and may be computed by using a specific algorithm, which is not limited herein. Then, after obtaining the association degree parameter of each multimedia content in the multimedia content collection, each multimedia content in the multimedia content collection may be sorted according to the magnitude of the association degree parameter and displayed in the play queue, so that the multimedia content in the play queue is sorted according to the user's preference, thereby enabling the user to first play a multimedia content favored by the user, and improving the user experience in the player.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to receiving an active request from a user, prompt information is sent to the user to clearly inform the user that a requested operation will require access to and use of personal information of the user. As such, the user can independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. Furthermore, the pop-up window may also include a selection control for the user to choose whether to "agree" or "disagree" to provide the personal information to the electronic device.

It can be understood that the above process of notifying and obtaining user authorization is only illustrative and does not constitute a limitation on the implementations of the present disclosure, and other manners that satisfy the relevant laws and regulations may also be applied in the implementations of the present disclosure.

Certainly, the sequence adjustment on the play queue in this embodiment may also be implemented by other methods, which may not be limited in this embodiment.

S202: acquiring a recommended multimedia content, adding the recommended multimedia content into the play queue of the multimedia content collection, and identifying the recommended multimedia content in the play queue.

In this embodiment, in order to enable the user to discover more interesting multimedia contents based on the existing multimedia content collection and to make the content in the multimedia content collection richer, the multimedia content collection is no longer limited to the original multimedia content. Therefore, in this embodiment, the recommended multimedia content is added into the multimedia content. The recommended multimedia content may be acquired from a storage unit of the device where the player is located, or may be acquired from a server.

In an optional embodiment, the recommended multimedia content may be acquired according to the attribute information of the user group to which the user belongs. For example, an association degree parameter between the user group and each of candidate multimedia contents may be acquired from a multimedia content database, and according to the association degree parameter, a preset number of the candidate multimedia contents are selected from the candidate multimedia contents as the recommended multimedia content, which can make the acquired recommended multimedia content more in line with the user's preference.

In another optional embodiment, according to the multimedia content in the multimedia content collection, the related multimedia content may also be acquired and determined as the recommended multimedia content. The related multimedia content may be a multimedia content that belongs to the same album or category, has identical or similar attribute or tag (a music style, an artist, a tempo, etc.), or has identical or similar name, etc., relative to the multimedia content in the multimedia content collection.

In another optional embodiment, without conflict, the recommended multimedia content may also be acquired by combining the attribute information of the user group to which the user belongs and the multimedia content related to the multimedia content in the multimedia content collection.

Certainly, in this embodiment, the recommended multimedia content may also be acquired by other methods. Details are not provided herein again. In addition, the recommended multimedia content may be acquired by a terminal, or may also be acquired by a server and then sent to the terminal.

It should be noted that for a process of performing the sequence adjustment for the user on the play queue of the multimedia content collection and a process of acquiring the recommended multimedia content, there is no limitation on the order of execution, and they may be executed in any order or executed simultaneously.

For example, the recommended multimedia content may be acquired after performing a sequence adjustment for the user on a play queue of a multimedia content collection. In particular, when acquiring a related multimedia content according to a multimedia content in the multimedia content collection and determining the related multimedia content as the recommended multimedia content, since the play queue after the sequence adjustment can have already reflected preference of the user group to which the user belongs, only a related multimedia content may be acquired for some multimedia content that the user group has higher preference for. That is, the related multimedia content is acquired according to a preset number of multimedia contents that are sorted at front of the play queue, and determined as the recommended multimedia content. The recommended multimedia content acquired in this way is more in line with the user's preference, and for a multimedia content that the user group has relatively low preference for, related multimedia content may not be acquired.

In addition, in this embodiment, the recommended multimedia content may be identified in the play queue, making it convenient for the user to check which multimedia content is the newly added recommended multimedia content, and also convenient for the user to perform an operation such as play, skip, favorite, or delete on the recommended multimedia content.

S203: playing a multimedia content in the play queue.

In this embodiment, after performing a sequence adjustment for the user on a play queue of a multimedia content collection and adding the recommended multimedia content, the multimedia content in the play queue may be played sequentially.

According to the method for multimedia playback provided in this embodiment of the present disclosure, in response to the target playing mode triggering instruction of the user in the player, the sequence adjustment is performed for the user on the play queue of the multimedia content collection; the recommended multimedia content is acquired, the recommended multimedia content is added into the play queue of the multimedia content collection, and the recommended multimedia content is identified in the play queue; and the multimedia content in the play queue is played. In the target playing mode, the sequence adjustment is performed for the user on the play queue of the multimedia content collection, so that the playback order can be more in line with the user's preference. In addition, adding the recommended multimedia content into the play queue makes it possible for the user to discover more interesting multimedia contents based on the existing multimedia content collection, which makes the content in the multimedia content collection richer, thereby improving the experience of using the player.

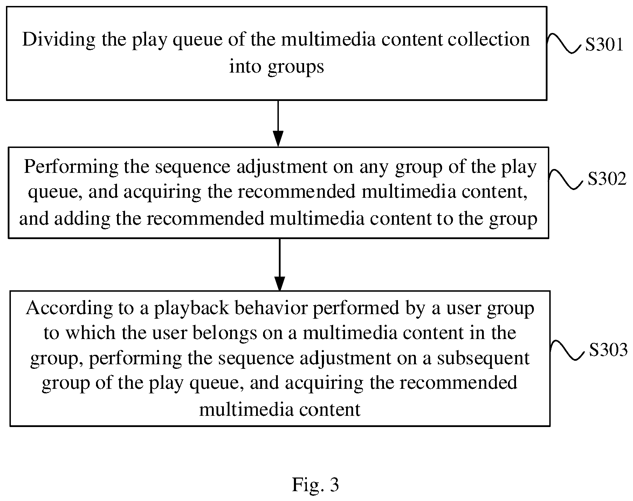

On the basis of any one of the above embodiments, performing the sequence adjustment for the user on the play queue of the multimedia content collection and adding the recommended multimedia content into the play queue of the multimedia content collection may also be carried out dynamically. Specifically, as shown in Fig. 3, the performing a sequence adjustment for the user on a play queue of a multimedia content collection, acquiring a recommended multimedia content, and adding the recommended multimedia content into the play queue of the multimedia content collection, may include the following steps.

S301: dividing the play queue of the multimedia content collection into groups.

S302: performing the sequence adjustment on any group of the play queue, and acquiring the recommended multimedia content, and adding the recommended multimedia content into the group.

S303: according to a playback behavior performed by a user group to which the user belongs on a multimedia content in the group, performing the sequence adjustment on a subsequent group of the play queue, and acquiring the recommended multimedia content.

In this embodiment, the sequence adjustment on the play queue of the multimedia content collection and addition of the recommended multimedia content into the play queue of the multimedia content collection may be performed in batches. For example, the play queue of the multimedia content collection includes 100 multimedia contents, where 20 multimedia contents of the 100 multimedia contents are put into one group. The sequence adjustment is first performed on a play queue of multimedia contents in the first group, then recommended multimedia content is acquired and added into the first group, where the process of performing the sequence adjustment and the process of acquiring the recommended multimedia content may be performed in a manner described in any one of the embodiments. Details are not described herein again. Further, a playback behavior of the user group to which the user belongs on the multimedia content in the first group may be acquired, and may be used as a basis for performing the sequence adjustment on a subsequent group and acquiring a recommended multimedia content. Certainly, the sequence adjustment and acquiring the recommended multimedia content may be performed based on only a playback behavior performed by each user in the user group on the multimedia content in one or more of previous groups. Alternatively, the playback behavior performed by each user in the user group on the multimedia content in the one or more of previous groups may be combined with the process of performing the sequence adjustment and the process of acquiring the recommended multimedia content in each of the above embodiments. For example, when performing the sequence adjustment according to the attribute information of the user group to which the user belongs and acquiring the recommended multimedia content, the attribute information of the user group to which the user belongs may also be dynamically adjusted according to a playback behavior performed by the user group on the multimedia content in the one or more of previous groups, so as to improve the accuracy of performing a sequence adjustment on the play queue and acquiring the recommended multimedia content.

Further, when performing a sequence adjustment on the play queue of the multimedia content collection and adding the recommended multimedia content into the play queue of the multimedia content collection are carried out dynamically, a number or proportion of the recommended multimedia content may also be dynamically determined, which specifically includes: according to a playback behavior performed by the user group to which the user belongs on a recommended multimedia content in the groups, determining an acceptance level parameter of the user group to which the user belongs for the recommended multimedia content; and according to the acceptance level parameter, determining a number or proportion of the recommended multimedia content.

In this embodiment, according to the playback behavior performed by each user in the user group on the recommended multimedia content in the one or more of previous groups, the acceptance level parameter of the user for the recommended multimedia content may be determined. The acceptance level parameter is used to measure whether the user group is interested in the added recommended multimedia content, and may be quantified by means of an algorithm. The playback behavior includes, but is not limited to, full content playback, skip, delete, like, favorite, view details, etc. Then, the number or proportion of the recommended multimedia content may be determined according to the acceptance level parameter. When the acceptance level parameter indicates that the user group has much interest in the recommended multimedia content, the number or proportion of the recommended multimedia content may be increased; and conversely, when the acceptance level parameter indicates that the user group has no interest in the recommended multimedia content, the number or proportion of the recommended multimedia content may be decreased.

Certainly, when performing a sequence adjustment on the play queue of the multimedia content collection and adding the recommended multimedia content into the play queue of the multimedia content collection are carried out non-dynamically or in other cases, a number or proportion of the recommended multimedia content may also be determined, which specifically includes: according to a historical playback behavior performed by a user group to which the user belongs on a historical recommended multimedia content, determining an acceptance level parameter of the user group to which the user belongs for the recommended multimedia content; and according to the acceptance level parameter, determining a number or proportion of the recommended multimedia content.

In this embodiment, according to the historical playback behavior performed by each user in the user group to which the user belongs on the historical recommended multimedia content, the acceptance level parameter of the user group for the recommended multimedia content may be determined, thereby determining the number or proportion of the recommended multimedia content. The historical recommended multimedia content may be a recommended multimedia content acquired during the process of playing any historical multimedia content collection. The principle of this embodiment is the same as that of the process described above, and details are not described herein again.

On the basis of any one of the above embodiments, optionally, the performing a sequence adjustment for the user on a play queue of a multimedia content collection, may further include: performing the sequence adjustment on the play queue of the multimedia content collection according to attribute information of a multimedia content, so that the multimedia contents that have same or similar attribute information are adjacent in the play queue.

In this embodiment, when performing the sequence adjustment on the play queue of the multimedia content collection, the sequence adjustment may also be performed according to the attribute information of the multimedia content, so that the multimedia contents in the play queue that have identical or similar attribute information are adjacent. The attribute information includes, but is not limited to, a type, a style (such as a music style), a tempo, an artist, an album, etc., so as to avoid discomfort of the user or the impact on the user's experience that is caused by a large difference in attribute information of two adjacent multimedia contents when playing the multimedia content by the user. For example, a large variation, which occurs when a piece of agitating music (such as rock music or fast-tempo music) is played following the listening of a full piece of soothing music (such as a ballad or slow-tempo music) by the user, may be avoided. In this embodiment, the multimedia contents in the play queue that have identical or similar attribute information are adjacent, so that there may be a smooth transition between the multimedia contents, such as a gradual change from a slow tempo to a fast tempo and from soothing music to agitating music, thereby improving the playback experience.

On this basis, when recommending a multimedia content, the recommended multimedia content may be acquired according to the attribute information of the adjacent multimedia contents in the play queue, so that there is no large variation between the recommended multimedia content and the adjacent multimedia content.

For example, when the adjacent multimedia contents have identical or similar attribute information, the recommended multimedia content of which attribute information is identical or similar to the attribute information of the adjacent multimedia contents, is acquired. Further, the recommended multimedia content may be added before, between, or after the adjacent multimedia contents in the play queue, so that there is no large variation during play.

For another example, when the adjacent multimedia contents have different or dissimilar attribute information, the recommended multimedia content of which attribute information is between the attribute information of the adjacent multimedia contents is acquired; and the recommended multimedia content is added between the adjacent multimedia contents in the play queue, so that there is a better transition between the adjacent multimedia contents, which reduces the variation during play.

On the basis of any one of the above embodiments, at any moment after the target playing mode is initiated, the user can also switch from the target playing mode to another playing mode, such as the conventional shuffle play or playlist play mode. In response to a playing mode switching instruction of the user in the player, the recommended multimedia content may be removed from the play queue, and a sequence adjustment may be performed on the play queue according to a playing mode after switching. For example, in response to switching to the conventional shuffle play mode, then a random order is determined for the play queue, for another example, in response to switching to the playlist play mode, then the play queue is adjusted back to a sequence order of a playlist, etc.

On the basis of any one of the above embodiments, when the user does not want to play a recommended multimedia content, the user may also individually shutdown multimedia content recommendation for the target playing mode. In response to a recommendation shutdown instruction of the user in the player, the recommended multimedia content may be removed from the play queue and a sequence order of the play queue is maintained, so as to satisfy the user's preference.

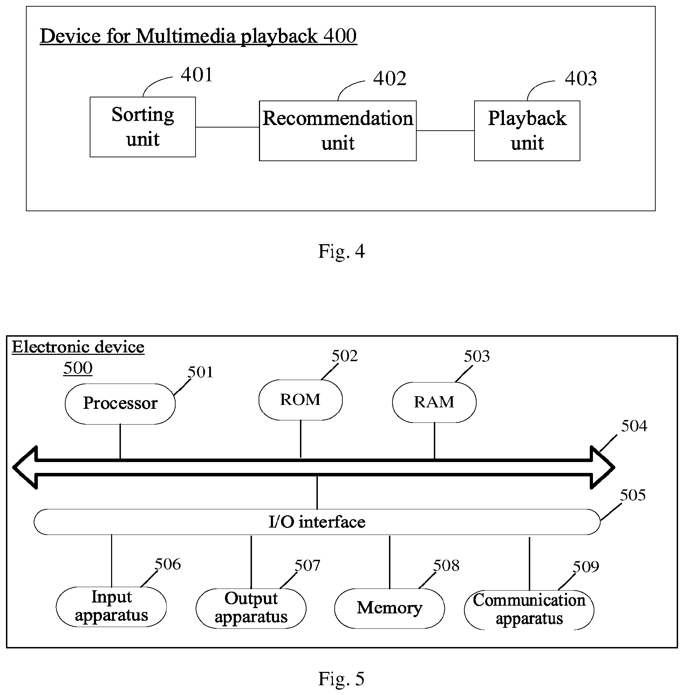

Corresponding to the method for multimedia playback in the above embodiments, Fig. 4 is a structural block diagram of an apparatus for multimedia playback provided in an embodiment of the present disclosure. For ease of illustration, only parts related to this embodiment of the present disclosure are shown. Referring to Fig. 4, the apparatus for multimedia playback 400 includes a sorting unit 401, a recommendation unit 402 and a playback unit 403.

The sorting unit 401 is configured to perform a sequence adjustment for a user on a play queue of a multimedia content collection, in response to a target playing mode triggering instruction of the user in a player.

The recommendation unit 402 is configured to acquire a recommended multimedia content, add the recommended multimedia content into the play queue of the multimedia content collection, and identify the recommended multimedia content in the play queue.

The playback unit 403 is configured to play a multimedia content in the play queue.

In one or more embodiments of the present disclosure, when performing a sequence adjustment for the user on a play queue of a multimedia content collection, the sorting unit 401 is configured to perform the sequence adjustment on the play queue of the multimedia content collection according to attribute information of a user group to which the user belongs.

In one or more embodiments of the present disclosure, when acquiring the recommended multimedia content, the recommendation unit 402 is configured to: acquire the recommended multimedia content according to attribute information of the user group to which the user belongs; and/or acquire a related multimedia content according to a multimedia content in the multimedia content collection, and determine the related multimedia content as the recommended multimedia content.

In one or more embodiments of the present disclosure, when acquiring a related multimedia content according to a multimedia content in the multimedia content collection, and determining the related multimedia content as the recommended multimedia content, the recommendation unit 402 is configured to: after the performing a sequence adjustment for the user on a play queue of a multimedia content collection, acquire the related multimedia content according to a preset number of multimedia contents that are sorted at front of the play queue, and determine the related multimedia content as the recommended multimedia content.

In one or more embodiments of the present disclosure, the sorting unit 401 is specifically configured to divide the play queue of the multimedia content collection into groups; and perform a sequence adjustment on any group of the play queue.

The recommendation unit 402 is configured to acquire the recommended multimedia content, and add the recommended multimedia content into the group.

The sorting unit 401 is further configured to, according to a playback behavior performed by a user group to which the user belongs on a multimedia content in the group, perform the sequence adjustment on a subsequent group of the play queue.

The recommendation unit 402 is further configured to acquire a recommended multimedia content according to a playback behavior performed by the user group to which the user belongs on multimedia content in the group.

In one or more embodiments of the present disclosure, when performing the sequence adjustment for the user on the play queue of the multimedia content collection, the sorting unit 401 is configured to perform the sequence adjustment on the play queue of the multimedia content collection according to attribute information of a multimedia content, so that multimedia contents that have same or similar attribute information are adjacent in the play queue.

When acquiring the recommended multimedia content, the recommendation unit 402 is configured to acquire the recommended multimedia content according to attribute information of adjacent multimedia contents in the play queue.

In one or more embodiments of the present disclosure, the recommendation unit 402 is specifically further configured to, in response to the attribute information of the adjacent multimedia contents being identical or similar, acquire a recommended multimedia content of which attribute information is identical or similar to the attribute information of the adjacent multimedia contents; add the recommended multimedia content before the adjacent multimedia contents, between the adjacent multimedia contents, or after the adjacent multimedia contents in the play queue.

Or, the recommendation unit 402 is specifically further configured to, in response to the attribute information of the adjacent multimedia contents being different or dissimilar, acquire a recommended multimedia content of which attribute information is between the attribute information of the adjacent multimedia contents; and add the recommended multimedia content between the adjacent multimedia contents in the play queue.

In one or more embodiments of the present disclosure, the recommendation unit 402 is further configured to: according to a historical playback behavior performed by a user group to which the user belongs on a historical recommended multimedia content, determine an acceptance level parameter of the user group to which the user belongs for the recommended multimedia content; and determine a number or proportion of the recommended multimedia content according to the acceptance level parameter.

In one or more embodiments of the present disclosure, the recommendation unit 402 is further configured to: according to a playback behavior performed by the user group to which the user belongs on a recommended multimedia content in the groups, determine an acceptance level parameter of the user group to which the user belongs for the recommended multimedia content; and determine a number or proportion of the recommended multimedia content according to the acceptance level parameter.

In one or more embodiments of the present disclosure, the apparatus for multimedia playback further includes a control unit, which is configured to: in response to a playing mode switching instruction of the user in the player, remove the recommended multimedia content from the play queue, and perform the sequence adjustment on the play queue according to a playing mode after switching.

In one or more embodiments of the present disclosure, the control unit is further configured to: in response to a recommendation shutdown instruction of the user in the player, remove the recommended multimedia content from the play queue, and maintain a sequence order of the play queue.

The apparatus for multimedia playback provided in this embodiment may be configured to execute the technical solution of the above method embodiments. The implementation principle and technical effects thereof are similar, and are not described herein again in this embodiment.

Fig. 5 is a structural schematic diagram of an electronic device 500 that is suitable for implementing the embodiments of the present disclosure. The electronic device 500 may be a terminal device or a server. The terminal device may include, but is not limited to, a mobile terminal such as a mobile phone, a notebook computer, a digital broadcast receiver, a personal digital assistant (PDA), a tablet computer (portable android device, PAD), a portable media player (PMP), and a vehicle-mounted terminal (such as a vehicle navigation terminal), and a fixed terminal such as a digital TV and a desktop computer. The electronic device shown in Fig. 5 is merely an example, and shall not impose any limitation on the function and scope of use of the embodiments of the present disclosure.

As shown in Fig. 5, the electronic device 500 may include a processor (e.g., a central processor, a graphics processor) 501 that may perform a variety of appropriate actions and processing in accordance with a program stored in a read-only memory (ROM) 502 or a program loaded from a memory 508 into a random access memory (RAM) 503. The RAM 503 further stores various programs and data required for the operation of the electronic device 500. The processor 501, the ROM 502, and the RAM 503 are connected to each other through a bus 504. An input/output (I/O) interface 505 is also connected to the bus 504.

Generally, the following apparatuses may be connected to the I/O interface 505: an input apparatus 506 including, for example, a touchscreen, a touchpad, a keyboard, a mouse, a camera, a microphone, an accelerometer, and a gyroscope; an output apparatus 507 including, for example, a liquid crystal display (LCD), a speaker, and a vibrator; the memory 508 including, for example, a tape and a hard disk; and a communication apparatus 509. The communication apparatus 509 may allow the electronic device 500 to perform wireless or wired communication with other devices to exchange data. Although Fig. 5 shows the electronic device 500 that has various apparatuses, it should be understood that it is not required to implement or have all of the shown apparatuses. It may be an alternative to implement or have more or fewer apparatuses.

In particular, according to embodiments of the present disclosure, the process described above with reference to the flowchart may be implemented as a computer software program. For example, this embodiment of the present disclosure includes a computer program product, which includes a computer program carried on a computer-readable medium, where the computer program includes program code for performing the method shown in the flowchart. In such an embodiment, the computer program may be downloaded from a network through the communication apparatus 509 and installed, installed from the memory 508, or installed from the ROM 502. When the computer program is executed by the processor 501, the above-mentioned functions defined in the method of the embodiment of the present disclosure are performed.

It should be noted that the above computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to perform the method shown in the above embodiment.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions identified in the blocks may also occur in an order different from that identified in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two Internet Protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof.

In the first aspect, according to one or more embodiments of the present disclosure, a method for multimedia playback is provided. The method includes: in response to a target playing mode triggering instruction of a user in a player, performing a sequence adjustment for the user on a play queue of a multimedia content collection; acquiring a recommended multimedia content, adding the recommended multimedia content into the play queue of the multimedia content collection, and identifying the recommended multimedia content in the play queue; and playing a multimedia content in the play queue.

According to one or more embodiments of the present disclosure, the performing a sequence adjustment for the user on a play queue of a multimedia content collection, includes performing the sequence adjustment on the play queue of the multimedia content collection according to attribute information of a user group to which the user belongs.

According to one or more embodiments of the present disclosure, the acquiring a recommended multimedia content includes: acquiring the recommended multimedia content according to attribute information of the user group to which the user belongs; and/or acquiring a related multimedia content according to a multimedia content in the multimedia content collection, and determining the related multimedia content as the recommended multimedia content.

According to one or more embodiments of the present disclosure, the acquiring a related multimedia content according to a multimedia content in the multimedia content collection, and determining the related multimedia content as the recommended multimedia content, includes: after the performing a sequence adjustment for the user on a play queue of a multimedia content collection, acquiring the related multimedia content according to a preset number of multimedia contents that are sorted at front of the play queue, and determining the related multimedia content as the recommended multimedia content.

According to one or more embodiments of the present disclosure, the performing a sequence adjustment for the user on a play queue of a multimedia content collection, acquiring a recommended multimedia content, and adding the recommended multimedia content into the play queue of the multimedia content collection, includes: dividing the play queue of the multimedia content collection into groups; performing the sequence adjustment on any group of the play queue, and acquiring the recommended multimedia content, and adding the recommended multimedia content into the group; and according to a playback behavior performed by a user group to which the user belongs on a multimedia content in the group, performing the sequence adjustment on a subsequent group of the play queue, and acquiring the recommended multimedia content.

According to one or more embodiments of the present disclosure, the performing a sequence adjustment for the user on a play queue of a multimedia content collection, includes:
performing the sequence adjustment on the play queue of the multimedia content collection according to attribute information of a multimedia content, so that multimedia contents that have same or similar attribute information are adjacent in the play queue.

The acquiring a recommended multimedia content, includes: acquiring the recommended multimedia content according to attribute information of adjacent multimedia contents in the play queue.

According to one or more embodiments of the present disclosure, the acquiring the recommended multimedia content according to attribute information of adjacent multimedia contents in the play queue, includes: in response to the attribute information of the adjacent multimedia contents being identical or similar, acquiring a recommended multimedia content of which attribute information is identical or similar to the attribute information of the adjacent multimedia contents; and the adding the recommended multimedia content into the play queue of the multimedia content collection, includes: adding the recommended multimedia content before the adjacent multimedia contents, between the adjacent multimedia contents, or after the adjacent multimedia contents in the play queue; or

the acquiring the recommended multimedia content according to attribute information of adjacent multimedia contents in the play queue, includes: in response to the attribute information of the adjacent multimedia contents being different or dissimilar, acquiring a recommended multimedia content of which attribute information is between the attribute information of the adjacent multimedia contents; and the adding the recommended multimedia content into the play queue of the multimedia content collection, includes: adding the recommended multimedia content between the adjacent multimedia contents in the play queue.

According to one or more embodiments of the present disclosure, the method further includes: according to a historical playback behavior performed by a user group to which the user belongs on a historical recommended multimedia content, determining an acceptance level parameter of the user group to which the user belongs for the recommended multimedia content; and according to the acceptance level parameter, determining a number or proportion of the recommended multimedia content.

According to one or more embodiments of the present disclosure, the method further includes: according to a playback behavior performed by the user group to which the user belongs on a recommended multimedia content in the groups, determining an acceptance level parameter of the user group to which the user belongs for the recommended multimedia content; and according to the acceptance level parameter, determining a number or proportion of the recommended multimedia content.

According to one or more embodiments of the present disclosure, the method further includes: in response to a playing mode switching instruction of the user in the player, removing the recommended multimedia content from the play queue, and performing the sequence adjustment on the play queue according to a playing mode after switching.

According to one or more embodiments of the present disclosure, the method further includes: in response to a recommendation shutdown instruction of the user in the player, removing the recommended multimedia content from the play queue, and maintaining a sequence order of the play queue.

In the second aspect, according to one or more embodiments of the present disclosure, an apparatus for multimedia playback is provided. The device includes a sorting unit, a recommendation unit and a playback unit.

The sorting unit configured to perform a sequence adjustment for a user on a play queue of a multimedia content collection, in response to a target playing mode triggering instruction of the user in a player,.

The recommendation unit is configured to acquire a recommended multimedia content, add the recommended multimedia content into the play queue of the multimedia content collection, and identify the recommended multimedia content in the play queue.

The playback unit is configured to play a multimedia content in the play queue.

According to one or more embodiments of the present disclosure, when performing a sequence adjustment for the user on a play queue of a multimedia content collection, the sorting unit is configured to perform the sequence adjustment on the play queue of the multimedia content collection according to attribute information of a user group to which the user belongs.

According to one or more embodiments of the present disclosure, when acquiring the recommended multimedia content, the recommendation unit is configured to: acquire the recommended multimedia content according to attribute information of the user group to which the user belongs; and/or acquire a related multimedia content according to a multimedia content in the multimedia content collection, and determine the related multimedia content as the recommended multimedia content.

According to one or more embodiments of the present disclosure, when acquiring a related multimedia content according to a multimedia content in the multimedia content collection, and determining the related multimedia content as the recommended multimedia content, the recommendation unit is configured to: after the performing a sequence adjustment for the user on a play queue of a multimedia content collection, acquire the related multimedia content according to a preset number of multimedia contents that are sorted at front of the play queue, and determine the related multimedia content as the recommended multimedia content.

According to one or more embodiments of the present disclosure, the sorting unit is specifically configured to divide the play queue of the multimedia content collection into groups; and perform a sequence adjustment on any group of the play queue.

The recommendation unit is configured to acquire the recommended multimedia content, and add the recommended multimedia content into the group.

The sorting unit is further configured to, according to a playback behavior performed by a user group to which the user belongs on a multimedia content in the group, perform the sequence adjustment on a subsequent group of the play queue.

The recommendation unit is further configured to acquire a recommended multimedia content according to a playback behavior performed by the user group to which the user belongs on multimedia content in the group.

According to one or more embodiments of the present disclosure, when performing the sequence adjustment for the user on the play queue of the multimedia content collection, the sorting unit is configured to perform the sequence adjustment on the play queue of the multimedia content collection according to attribute information of a multimedia content, so that pieces of multimedia content that have same or similar attribute information are adjacent in the play queue.

When acquiring the recommended multimedia content, the recommendation unit is configured to acquire the recommended multimedia content according to attribute information of adjacent multimedia contents in the play queue.

According to one or more embodiments of the present disclosure, the recommendation unit is specifically further configured to, in response to the attribute information of the adjacent multimedia contents being identical or similar, acquire a recommended multimedia content of which attribute information is identical or similar to the attribute information of the adjacent multimedia contents; add the recommended multimedia content before the adjacent multimedia contents, between the adjacent multimedia contents, or after the adjacent multimedia contents in the play queue.

Or, the recommendation unit is specifically further configured to, in response to the attribute information of the adjacent multimedia contents being different or dissimilar, acquire a recommended multimedia content of which attribute information is between the attribute information of the adjacent multimedia contents; and add the recommended multimedia content between the adjacent multimedia contents in the play queue

According to one or more embodiments of the present disclosure, the recommendation unit is further configured to: according to a historical playback behavior performed by a user group to which the user belongs on a historical recommended multimedia content, determine an acceptance level parameter of the user group to which the user belongs for the recommended multimedia content; and determine a number or proportion of the recommended multimedia content according to the acceptance level parameter.

According to one or more embodiments of the present disclosure, the recommendation unit is further configured to: according to a playback behavior performed by the user group to which the user belongs on a recommended multimedia content in the groups, determine an acceptance level parameter of the user group to which the user belongs for the recommended multimedia content; and determine a number or proportion of the recommended multimedia content according to the acceptance level parameter.

According to one or more embodiments of the present disclosure, the apparatus for multimedia playback further includes a control unit, which is configured to: in response to a playing mode switching instruction of the user in the player, remove the recommended multimedia content from the play queue, and perform the sequence adjustment on the play queue according to a playing mode after switching.

According to one or more embodiments of the present disclosure, the control unit is further configured to: in response to a recommendation shutdown instruction of the user in the player, remove the recommended multimedia content from the play queue, and maintain a sequence order of the play queue.

In the third aspect, according to one or more embodiments of the present disclosure, an electronic device is provided. The electronic device includes at least one processor and a memory. The memory stores computer-executable instructions; and the at least one processor executes the computer-executable instructions stored in the memory, to cause the at least one processor to execute the method for multimedia playback as described in the first aspect and various possible designs of the first aspect.

In the fourth aspect, according to one or more embodiments of the present disclosure, a computer-readable storage medium is provided. The computer-readable storage medium stores computer-executable instructions, and when the computer-executable instructions are executed by a processor, the processor implements the method for multimedia playback as described in the first aspect and various possible designs of the first aspect.

In the fifth aspect, according to one or more embodiments of the present disclosure, a computer program product is provided, and includes computer-executable instructions. When the computer-executable instructions are executed by a processor, the processor implements the method for multimedia playback as described in the first aspect and various possible designs of the first aspect.

In the sixth aspect, according to one or more embodiments of the present disclosure, a computer program is provided. The computer program causes a computer to execute the method for multimedia playback as described in the first aspect and various possible designs of the first aspect.

In the target playing mode, the sequence adjustment is performed for the user on the play queue of the multimedia content collection, so that the playback order can be more in line with the user's preference. In addition, adding the recommended multimedia content to the play queue makes it possible for the user to discover more interesting multimedia contents based on the existing multimedia content collection, which makes content in the multimedia content collection richer, thereby improving the user experience in the player.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be understood as requiring these operations to be performed in the specific order shown or in a sequence order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A method for multimedia playback, comprising:
in response to a target playing mode triggering instruction of a user in a player, performing a sequence adjustment for the user on a play queue of a multimedia content collection;
acquiring a recommended multimedia content, adding the recommended multimedia content into the play queue of the multimedia content collection, and identifying the recommended multimedia content in the play queue; and
playing a multimedia content in the play queue.

2. The method according to claim 1, wherein the performing a sequence adjustment for the user on a play queue of a multimedia content collection, comprises:
performing, by the user, the sequence adjustment on the play queue of the multimedia content collection according to attribute information of a user group to which the user belongs.

3. The method according to claim 1 or 2, wherein the acquiring a recommended multimedia content, comprises:
acquiring the recommended multimedia content according to attribute information of the user group to which the user belongs; and/or
acquiring a related multimedia content according to a multimedia content in the multimedia content collection, and determining the related multimedia content as the recommended multimedia content.

4. The method according to claim 3, wherein the acquiring a related multimedia content according to a multimedia content in the multimedia content collection, and determining the related multimedia content as the recommended multimedia content, comprises:
after the performing a sequence adjustment for the user on a play queue of a multimedia content collection, acquiring the related multimedia content according to a preset number of multimedia contents that are sorted at front of the play queue, and determining the related multimedia content as the recommended multimedia content.

5. The method according to claim 1 or 2, wherein the performing a sequence adjustment for the user on a play queue of a multimedia content collection, acquiring a recommended multimedia content, and adding the recommended multimedia content into the play queue of the multimedia content collection, comprises:
dividing the play queue of the multimedia content collection into groups;
performing the sequence adjustment on any group of the play queue, acquiring the recommended multimedia content, and adding the recommended multimedia content into the group; and
according to a playback behavior performed by a user group to which the user belongs on a multimedia content in the group, performing the sequence adjustment on a subsequent group of the play queue and acquiring the recommended multimedia content.

6. The method according to claim 1, wherein the performing a sequence adjustment for the user on a play queue of a multimedia content collection, comprises:
performing the sequence adjustment on the play queue of the multimedia content collection according to attribute information of a multimedia content, so that multimedia contents that have same or similar attribute information are adjacent in the play queue; and
the acquiring a recommended multimedia content, comprises:
acquiring the recommended multimedia content according to attribute information of adjacent multimedia contents in the play queue.

7. The method according to claim 6, wherein the acquiring the recommended multimedia content according to attribute information of adjacent multimedia contents in the play queue, comprises:
in response to the attribute information of the adjacent multimedia contents being identical or similar, acquiring a recommended multimedia content of which attribute information is identical or similar to the attribute information of the adjacent multimedia contents; and
the adding the recommended multimedia content into the play queue of the multimedia content collection, comprises:
adding the recommended multimedia content before the adjacent multimedia contents, between the adjacent multimedia contents, or after the adjacent multimedia contents in the play queue; or
the acquiring the recommended multimedia content according to attribute information of pieces of adjacent multimedia contents in the play queue, comprises:
in response to the attribute information of the adjacent multimedia contents being different or dissimilar, acquiring a recommended multimedia content of which attribute information is between the attribute information of the adjacent multimedia contents; and
the adding the recommended multimedia content into the play queue of the multimedia content collection, comprises:
adding the recommended multimedia content between the adjacent multimedia contents in the play queue.

8. The method according to any one of claims 1 to 7, further comprising:
according to a historical playback behavior performed by a user group to which the user belongs on a historical recommended multimedia content, determining an acceptance level parameter of the user group to which the user belongs for the recommended multimedia content; and
according to the acceptance level parameter, determining a number or proportion of the recommended multimedia content.

9. The method according to claim 5, further comprising:
according to a playback behavior performed by the user group to which the user belongs on a recommended multimedia content in the groups, determining an acceptance level parameter of the user group to which the user belongs for the recommended multimedia content; and
according to the acceptance level parameter, determining a number or proportion of the recommended multimedia content.

10. The method according to any one of claims 1 to 9, further comprising:
in response to a playing mode switching instruction of the user in the player, removing the recommended multimedia content from the play queue, and performing the sequence adjustment on the play queue according to a playing mode after switching.

11. The method according to any one of claims 1 to 10, further comprising:
in response to a recommendation shutdown instruction of the user in the player, removing the recommended multimedia content from the play queue, and maintaining a sequence order of the play queue.

12. A apparatus for multimedia playback, comprising:
a sorting unit, configured to perform a sequence adjustment for a user on a play queue of a multimedia content collection, in response to a target playing mode triggering instruction of the user in a player,;
a recommendation unit, configured to acquire a recommended multimedia content, add the recommended multimedia content into the play queue of the multimedia content collection, and identify the recommended multimedia content in the play queue; and
a playback unit, configured to play a multimedia content in the play queue.

13. An electronic device, comprising:
at least one processor and a memory,
wherein the memory stores computer-executable instructions; and
the at least one processor executes the computer-executable instructions stored in the memory, causing the at least one processor to execute the method according to any one of claims 1 to 11.

14. A computer-readable storage medium, storing computer-executable instructions, wherein when a processor executes the computer-executable instructions, the processor implements the method according to any one of claims 1 to 11.

15. A computer program product, comprising:
computer-executable instructions,
wherein when a processor executes the computer-executable instructions, the processor implements the method according to any one of claims 1 to 11.

16. A computer program, wherein the computer program causes a computer to execute the method according to any one of claims 1 to 11.
